# EUROPEAN PATENT APPLICATION

(11) **EP 4 535 459 A1**
(43) Date of publication of application: **09.04.2025**
(21) Application number: 22943318.0
(22) Date of filing: 23.06.2022
(51) Int. Cl.: H01M 4/36

(54) **COMPOSITE LITHIUM STORAGE MATERIAL FOR LITHIUM ION BATTERY, AND PREPARATION METHOD THEREFOR AND USE THEREOF**

(30) Priority: 27.05.2022 CN 202210586889
(71) Applicant: Tianmulake Excellent Anode Materials Co, Ltd., Liyang, Jiangsu 213330 (CN)
(72) Inventor: SHAO, Jin, Liyang, Jiangsu 213300 (CN); LUO, Fei, Liyang, Jiangsu 213300 (CN)
(74) Representative: Glück Kritzenberger Patentanwälte PartGmbB
(86) International application number: PCT/CN2022/100704
(87) International publication number: WO 2023/226125

(57) **Abstract**

The embodiments of the invention relate to a composite lithium storage material for a lithium ion battery, and a preparation method therefor and the use thereof. The composite lithium storage material comprises: a spherical porous hard carbon material and nano silicon, which grows in pores of the spherical porous hard carbon material in situ. The nano silicon is gasified from a micron-sized silicon powder by means of a high-frequency plasma treatment device and then grows in the pores of the porous hard carbon material in situ; and the particle size of the nano silicon is 0.1-50 nm, and the mass percentage of the nano silicon in the silicon-hard carbon composite material is 1-70%. The porous hard carbon material of the composite lithium storage material provided in the present invention is used as a matrix, and more nano silicon particles can be deposited in penetrating pores, so that the composite lithium storage material has a higher compaction density, such that the charging specific capacity of the material is improved, and the intercalation and deintercalation of lithium ions are facilitated during the charging and discharging process; in addition, the damage of the volume expansion thereof to the structure is relieved, and the cycle performance and charging performance of the material are improved.

## Description

This application claims priority for Chinese patent application No. 202210586889.0, entitled "COMPOSITE LITHIUM STORAGE MATERIAL FOR LITHIUM ION BATTERY, AND PREPARATION METHOD THEREFOR AND USE THEREOF" filed with China National Intellectual Property Administration on May 27, 2022.

### BACKGROUND OF THE INVENTION

### 1. Technical Field

The present invention relates to the technical field of batteries, in particular to a composite lithium storage material for a lithium ion battery, and a preparation method therefor and the use thereof.

### 2. Description of Related Art

Silicon has a maximum theoretical capacity of 4000 mAh/g when forming Li_{4.2}Si alloy, which is much higher than the theoretical capacity of graphite. However, the alloying process of silicon results in a volume expansion of 300%, leading to electrode pulverization and ultimately poor cycle performance of batteries.

Nanostructured electrodes can greatly enhance the performance of silicon negative electrodes because the fracture mechanism undergoes a change when the crystal size of a material reaches the level of a few tens of nanometers.

Currently, it is common to disperse silicon in carbon materials through chemical vapor deposition (CVD) to obtain nanostructured materials. However, the production of silicon-carbon composite materials using the CVD method faces difficulties in controlling the morphology of Si and C, consequently making it challenging to solve

### BRIEF SUMMARY OF THE INVENTION

Embodiments of the present invention provide a composite lithium storage material for a lithium ion battery, and a preparation method therefor and the use thereof. A high-temperature plasma torch is used to gasify a micron-sized silicon powder into gaseous silicon, and by utilizing a carrier gas, the gaseous silicon is transported into a condensation zone, where it undergoes rapid cooling and subsequent deposition into pores of a porous hard carbon material, allowing for in-situ nucleation and growth into nano silicon. The resulting nano silicon particles exhibit homogeneous structure and high purity, and the pores in the porous hard carbon material effectively confine the size of the deposited nano silicon and ensure even dispersion, reducing expansion effects and avoiding deteriorated electrical contact caused by electrode pulverization. The porous hard carbon material of the composite lithium storage material provided in the present invention is used as a matrix, and more nano silicon particles can be deposited in penetrating pores, so that the composite lithium storage material has a higher compaction density, such that the charging specific capacity of the material is improved, and the intercalation and deintercalation of lithium ions are facilitated during the charging and discharging process; in addition, the damage of the volume expansion thereof to the structure is relieved, and the cycle performance and charging performance of the material are improved.

In a first aspect, an embodiment of the present invention provides a composite lithium storage material for a lithium ion battery. The composite lithium storage material comprises: a spherical porous hard carbon material and nano silicon, which grows in pores of the spherical porous hard carbon material in situ;
the nano silicon is gasified from a micron-sized silicon powder by means of a high-frequency plasma treatment device and then grows in the pores of the porous hard carbon material in situ; and
the particle size of the nano silicon is 0.1-50 nm, and the mass percentage of the nano silicon in the silicon-hard carbon composite material is 1-70%.

Preferably, the average pore diameter of the pores of the spherical porous hard carbon material is 0.1-50 nm, and the particle size of the composite lithium storage material is 1-100 µm.

Preferably, the porous hard carbon material is prepared from a hard carbon matrix; the hard carbon matrix comprises one or more of glucose, sucrose, polyvinylpyrrolidone, starch, polyvinylidene fluoride, phenolic resin or polyvinyl chloride; and
the micron-sized silicon powder comprises one or more of residual silicon powder from diamond wire cutting of silicon materials, waste silicon powder from organosilicone production or industrial silicon powder.

In a second aspect, a preparation method for the composite lithium storage material for a lithium ion battery as described in the first aspect comprises:
placing a hard carbon matrix in a hydrothermal reactor for hydrothermal treatment, then cleaning and filtering discharged materials until a filtrate becomes transparent and colorless, and then drying to obtain hard carbon particles;
placing the hard carbon particles in a reaction device, raising the temperature to 700-1300°C and keeping the temperature for 0.5-15 hours for carbonization treatment, discharging, and crushing and screening discharged carbonized products to obtain a hard carbon precursor;
placing the hard carbon precursor in the reaction device, raising the temperature to 600-1000°C and keeping the temperature for 1-10 hours, and during the keeping process, introducing a gas source for pore formation treatment on the hard carbon precursor, resulting in a spherical porous hard carbon material;
placing the spherical porous hard carbon material in a condensation zone of a high-frequency plasma treatment device, and placing a micron-sized silicon powder in a high-temperature zone; introducing a protective gas into the high-frequency plasma treatment device to replace air, and turning on a plasma generator of the high-frequency plasma treatment device to ionize a working gas to generate a plasma torch, gasifying the micron-sized silicon powder into gaseous silicon; and transporting the gaseous silicon into the condensation zone by using a carrier gas, so that the gaseous silicon is deposited in pores of the porous hard carbon material, allowing for nucleation and growth into nano silicon, thereby obtaining the composite lithium storage material for a lithium ion battery.

The particle size of the nano silicon is 0.1-50 nm, and the mass percentage of the nano silicon in the silicon-hard carbon composite material is 1-70%.

Preferably, the hard carbon matrix comprises one or more of glucose, sucrose, polyvinylpyrrolidone, starch, polyvinylidene fluoride, phenolic resin or polyvinyl chloride;
the micron-sized silicon powder comprises one or more of residual silicon powder from diamond wire cutting of silicon materials, waste silicon powder from organosilicone production or industrial silicon powder; the particle size D50 of the micron-sized silicon powder is 5-100 µm;
the average pore diameter of the pores of the spherical porous hard carbon material is 0.1-50 nm; and
the particle size of the composite lithium storage material is 1-100 µm.

Preferably, the conditions of pressurized hydrothermal treatment are as follows: the pressure is 0.1-10 MPa, the heating temperature is 150-300°C, and the temperature is kept for 2-8 hours;
the conditions of non-pressurized hydrothermal treatment are as follows: the heating temperature is 200-300°C, and the temperature is kept for 5-30 hours; and
the reaction device comprises one of rotary furnace, tube furnace, bell type furnace or fluidized bed.

Preferably, the gas source comprises one of oxygen, carbon dioxide or water vapor, and the flow rate of the gas source is 0.5-20 L/min.

Preferably, the protective gas is nitrogen or argon, and the flow rate of the protective gas is 0.5-3 m³/h;
the working gas is nitrogen or argon, and the flow rate of the working gas is 3-8 m³/h;
the carrier gas is nitrogen or argon, and the flow rate of the carrier gas is 0.1-1 m³/h; and
the working voltage for the plasma generator to generate the plasma torch is 100-150 V, and the current is 80-180 A.

In a third aspect, an embodiment of the invention provides a negative electrode plate which comprises the composite lithium storage material as described in the first aspect.

In a fourth aspect, an embodiment of the invention provides a lithium ion battery which comprises the negative electrode plate as described in the third aspect.

According to the composite lithium storage material provided by the embodiment of the present invention, a high-temperature plasma torch is used to gasify a micron-sized silicon powder into gaseous silicon, and by utilizing a carrier gas, the gaseous silicon is transported into a condensation zone, where it undergoes rapid cooling and subsequent deposition into pores of a porous hard carbon material, allowing for in-situ nucleation and growth into nano silicon. The resulting nano silicon particles exhibit homogeneous structure and high purity, and the pores in the porous hard carbon material effectively confine the size of the deposited nano silicon and ensure even dispersion, reducing expansion effects and avoiding deteriorated electrical contact caused by electrode pulverization. The porous hard carbon material of the composite lithium storage material provided in the present invention is used as a matrix, and more nano silicon particles can be deposited in penetrating pores, so that the composite lithium storage material has a higher compaction density, such that the charging specific capacity of the material is improved, and the intercalation and deintercalation of lithium ions are facilitated during the charging and discharging process; in addition, the damage of the volume expansion thereof to the structure is relieved, and the cycle performance and charging performance of the material are improved.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method for a composite lithium storage material for a lithium ion battery provided by an embodiment of the present invention;
Fig. 2 is a structural diagram of a composite lithium storage material for a lithium ion battery prepared in Embodiment 1 of the present invention;
Fig. 3 is an X-ray diffraction (XRD) pattern of a composite lithium storage material for a lithium ion battery prepared in Embodiment 1 of the present invention; and
Fig. 4 is a charge-discharge graph of a composite lithium storage material for a lithium ion battery prepared in Embodiment 1 of the present invention.

### DETAILED DESCRIPTION OF THE INVENTION

The present invention will be further explained below by referring to drawings and specific embodiments, but it should be understood that these embodiments are only for more detailed explanation, and should not be construed as limiting the invention in any way, that is, not intended to limit the scope of protection of the present invention.

An embodiment of the present invention provides a composite lithium storage material for a lithium ion battery. The composite lithium storage material comprises: a spherical porous hard carbon material and nano silicon, which grows in pores of the spherical porous hard carbon material in situ;
the nano silicon is gasified from a micron-sized silicon powder by means of a high-frequency plasma treatment device and then grows in the pores of the porous hard carbon material in situ; and
The particle size of the nano silicon is 0.1-50 nm, and the mass percentage of the nano silicon in the silicon-hard carbon composite material is 1-70%.

The average pore diameter of the pores of the spherical porous hard carbon material is 0.1-50 nm, and the particle size of the composite lithium storage material is 1-100 µm.

The porous hard carbon material is prepared from a hard carbon matrix; the hard carbon matrix comprises one or more of glucose, sucrose, polyvinylpyrrolidone, starch polyvinylidene fluoride, phenolic resin or polyvinyl chloride; and
the micron-sized silicon powder comprises one or more of residual silicon powder from diamond wire cutting of silicon materials, waste silicon powder from organosilicone production or industrial silicon powder.

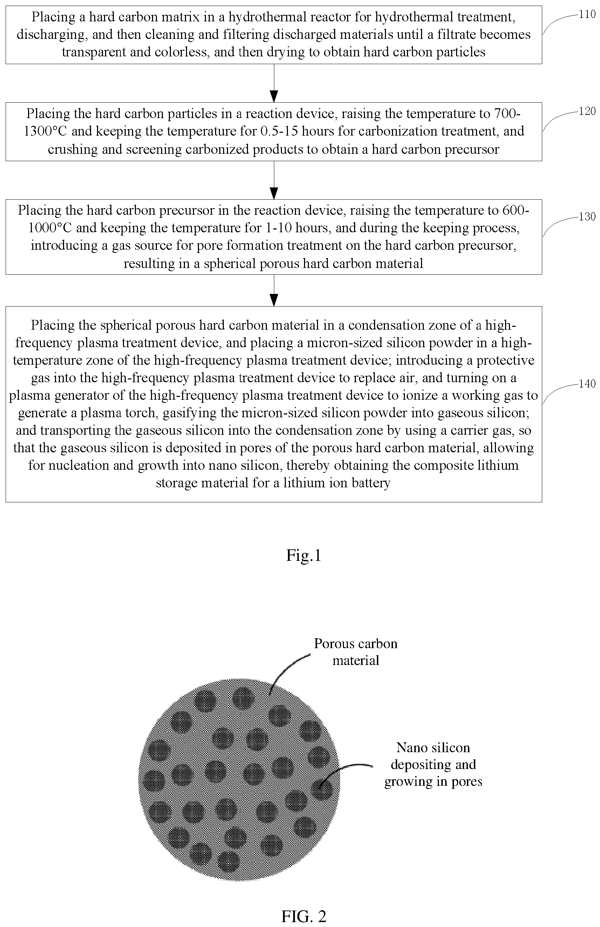

An embodiment of the present invention provides a preparation method for the composite lithium storage material for a lithium ion battery as described above. As shown in Fig. 1, the preparation method comprises:
Step 110, placing a hard carbon matrix in a hydrothermal reactor for hydrothermal treatment, discharging , and then cleaning and filtering discharged materials until a filtrate becomes transparent and colorless, and then drying to obtain hard carbon particles;
wherein the hard carbon matrix comprises one or more of glucose, sucrose, polyvinylpyrrolidone, starch, polyvinylidene fluoride, phenolic resin or polyvinyl chloride;
specifically, the hydrothermal treatment may be pressurized hydrothermal treatment or non-pressurized hydrothermal treatment;
the conditions of pressurized hydrothermal treatment are set as follows: the pressure is 0.1-10 MPa, the heating temperature is 150-300°C, and the temperature is kept for 2-8 hours; and
the conditions of non-pressurized hydrothermal treatment are set as follows: the heating temperature is 200-300°C, and the temperature is kept for 5-30 hours;
Step 120, placing the hard carbon particles in a reaction device, raising the temperature to 700-1300°C and keeping the temperature for 0.5-15 hours for carbonization treatment, and crushing and screening carbonized products to obtain a hard carbon precursor;
wherein the reaction device comprises one of rotary furnace, tube furnace, bell type furnace or fluidized bed;
Step 130, placing the hard carbon precursor in the reaction device, raising the temperature to 600-1000°C and keeping the temperature for 1-10 hours, and at the same time, introducing a gas source for pore formation treatment on the hard carbon precursor, resulting in a spherical porous hard carbon material;
wherein the gas source comprises one of oxygen, carbon dioxide or water vapor, and the flow rate of the gas source is 0.5-20 L/min;
Step 140, placing the spherical porous hard carbon material in a condensation zone of a high-frequency plasma treatment device, and placing a micron-sized silicon powder in a high-temperature zone of the high-frequency plasma treatment device; introducing a protective gas into the high-frequency plasma treatment device to replace air, and turning on a plasma generator of the high-frequency plasma treatment device to ionize a working gas to generate a plasma torch, gasifying the micron-sized silicon powder into gaseous silicon; and transporting the gaseous silicon into the condensation zone by using a carrier gas, so that the gaseous silicon is deposited in pores of the porous hard carbon material, allowing for nucleation and growth into nano silicon, thereby obtaining the composite lithium storage material for a lithium ion battery;
wherein the working frequency of the high-frequency plasma treatment device is 1-300 MHz. The following specific embodiments of the present invention are realized by using a DLZ-MA-300-B plasma generator as the high-frequency plasma treatment device.

The micron-sized silicon powder comprises one or more of residual silicon powder from diamond wire cutting of silicon materials, waste silicon powder from organosilicone production or industrial silicon powder. The utilization of residual silicon powder from cutting or waste silicon powder from production can further contribute to cost reduction, and since the micron-sized silicon powder needs to be gasified during the preparation process, the use of residual silicon powder from cutting or waste silicon powder from production will not compromise the product quality.

The particle size D50 of the micron-sized silicon powder is 5-100 µm;
the average pore diameter of the pores of the spherical porous hard carbon material is 0.1-50 nm;
the particle size of the nano silicon is 0.1-50 nm, and the mass percentage of the nano silicon in the silicon-hard carbon composite material is 1-70%; and the particle size of the composite lithium storage material is 1-100 µm.

The protective gas is nitrogen or argon, and the flow rate of the protective gas is 0.5-3 m³/h;
the working gas is nitrogen or argon, and the flow rate of the working gas is 3-8 m³/h;
the carrier gas is nitrogen or argon, and the flow rate of the carrier gas is 0.1-1 m³/h; and
the working voltage for the plasma generator to generate the plasma torch is 100-150 V, and the current is 80-180 A.

The composite lithium storage material provided by the embodiment of the present invention can be used as an negative active material in a negative electrode sheet, and the negative electrode sheet can be applied to a lithium ion battery.

In order to better understand the technical scheme provided by the present invention, the preparation process and characteristics of the composite lithium storage material for a lithium ion battery are described below with several specific examples.

### Embodiment 1

This embodiment provides a preparation process and performance test for a composite lithium storage material for a lithium ion battery. The preparation process comprises the following steps:
(1) placing 200 g of phenolic resin in a hydrothermal reactor for hydrothermal reaction, with the pressure being 10 Mpa, the heating temperature being 300°C, and the temperature being kept for 2 hours, then cleaning and filtering discharged materials until a filtrate became transparent and colorless, and then drying to obtain hard carbon particles;
(2) placing the hard carbon particles in a rotary furnace for carbonization treatment, raising the temperature to 1300°C, and then keeping the temperature for 0.5 hour, so as to obtain a hard carbon precursor;
(3) placing the hard carbon precursor in the rotary furnace, raising the temperature to 800°C and keeping the temperature for 10 hours, and at the same time, introducing a mixed gas source at a flow rate of 20 L/min for pore formation treatment on the hard carbon precursor, resulting in obtaining a spherical porous hard carbon material, wherein the mixed gas source was a mixture of carbon dioxide and water vapor; and
(4) placing the spherical porous hard carbon material in a condensation zone of a high-frequency plasma treatment device, and placing a residual silicon powder, with a particle size D50 of 5 µm, from diamond wire cutting of silicon materials in a high-temperature zone; introducing argon into the high-frequency plasma treatment device at a flow rate of 0.5 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 110 V and the current at 100 A, and argon with a flow rate of 3 m³/h was used as the working gas; and transporting the gaseous silicon into the condensation zone of the high-frequency plasma treatment device by using argon with a flow rate of 0.1 m³/h as a carrier gas, so that the gaseous silicon was deposited in pores of the spherical porous hard carbon material, allowing for nucleation and growth into nano silicon, thereby obtaining the composite lithium storage material for a lithium ion battery.

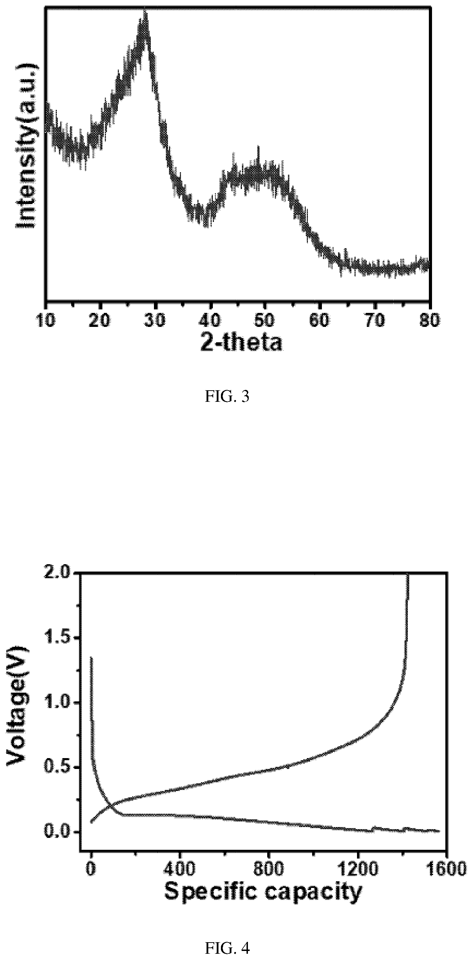

The XRD pattern of the composite lithium storage material for a lithium ion battery prepared by this embodiment is shown in Fig. 3.

The charge-discharge curve of the composite lithium storage material for a lithium ion battery prepared by this embodiment is shown in Fig. 4.

The composite lithium storage material for a lithium ion battery prepared by this embodiment is used to prepare electrodes, and batteries are assembled for testing.

The obtained negative electrode material, carbon black serving as a conductive additive, and a binder (sodium carboxymethyl cellulose and butadiene styrene rubber in a 1:1 ratio) were weighed according to the ratio of 95:2:3. Slurry was prepared in a beater at room temperature. The prepared slurry was evenly applied to copper foil. After being dried in a blast drying oven at 50°C for 2 hours, the material was cut into 8×8 mm electrode sheets, and then vacuum drying was performed in a vacuum drying oven at 100°C for 10 hours. The dried electrode sheets were immediately transferred into a glove box for battery assembly.

Simulated battery assembly was performed in a glove box containing high purity Ar atmosphere, the battery was assembled with lithium metal serving as a counter electrode and a solution of ethylene carbonate (EC)/dimethyl carbonate (DMC) containing 1 mol LiPF₆ as an electrolyte. A constant current charge-discharge mode test was carried out by using a charge-discharge instrument. The discharge cut-off voltage was 0.005 V and the charge cut-off voltage was 1.5 V. The charge-discharge test was carried out at C/10 current density. The test data are recorded in Table 1.

### Embodiment 2

This embodiment provides a preparation process and performance test for a composite lithium storage material for a lithium ion battery. The preparation process comprises the following steps:
(1) placing 200 g of phenolic resin in a hydrothermal reactor for hydrothermal reaction, with the pressure 5 Mpa, raising the temperature to 300°C, and keeping the temperature for 8 hours, then discharging materials, and cleaning and filtering the discharged materials until a filtrate became transparent and colorless, and then drying to obtain hard carbon particles;
(2) placing the hard carbon particles in a rotary furnace raising the heating temperature to 700°C, and keeping the temperature for 15 hour for carbonization treatment, so as to obtain a hard carbon precursor;
(3) placing the hard carbon precursor in the rotary furnace, raising the temperature to 1000°C , keeping the temperature for 10 hours, and introducing a gas source at a flow rate of 20 L/min for pore formation treatment on the hard carbon precursor, resulting in obtaining a spherical porous hard carbon material, wherein the gas source was a mixture of carbon dioxide and water vapor; and
(4) placing the spherical porous hard carbon material in a condensation zone of a high-frequency plasma treatment device, and placing a waste silicon powder, with a particle size D50 of 10 µm, from organosilicone production in a high-temperature zone; introducing nitrogen into the high-frequency plasma treatment device at a flow rate of 1 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 105 V and the current at 90 A, and nitrogen with a flow rate of 3.5 m³/h was used as the working gas; and transporting the gaseous silicon into the condensation zone of the high-frequency plasma treatment device by using nitrogen with a flow rate of 0.2 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 3

This embodiment provides a preparation process and performance test for a composite lithium storage material for a lithium ion battery. The preparation process comprises the following steps:
(1) placing 200 g of epoxy resin in a hydrothermal reactor for hydrothermal reaction, with the pressure 0.5 Mpa, raising the heating temperature to 300°C, and keeping the temperature for 8 hours, discharging materials, then cleaning and filtering the discharged materials until a filtrate became transparent and colorless, and then drying to obtain hard carbon particles;
(2) placing the hard carbon particles in a rotary furnace raising the heating temperature to 1300°C, and keeping the temperature for 1 hour for carbonization treatment, so as to obtain a hard carbon precursor;
(3) placing the hard carbon precursor in the rotary furnace, raising the temperature to 700°C and keeping the temperature for 10 hours, and introducing a gas source at a flow rate of 20 L/min for pore formation treatment on the hard carbon precursor, resulting in obtaining a spherical porous hard carbon material, wherein the gas source was a mixture of carbon dioxide and water vapor; and
(4) placing the spherical porous hard carbon material in a condensation zone of a high-frequency plasma treatment device, and placing a residual silicon powder, with a particle size D50 of 20 µm, from diamond wire cutting of silicon materials in a high-temperature zone; introducing argon into the high-frequency plasma treatment device at a flow rate of 1.5 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 110 V and the current at 100 A, and argon with a flow rate of 4 m³/h was used as the working gas; and transporting the gaseous silicon into the condensation zone of the high-frequency plasma treatment device by using argon with a flow rate of 0.3 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 4

This embodiment provides a preparation process and performance test for a composite lithium storage material for a lithium ion battery. The preparation process comprises the following steps:
(1) placing 200 g of phenolic resin in a hydrothermal reactor for hydrothermal reaction, with the pressure 5 Mpa, raising the heating temperature to 300°C, and keeping the temperature for 2 hours, discharging materials then cleaning and filtering the discharged materials until a filtrate became transparent and colorless, and then drying to obtain hard carbon particles;
(2) placing the hard carbon particles in a tube furnace raising the temperature to 700°C, and keeping the temperature for 1 hour for carbonization treatment, so as to obtain a hard carbon precursor;
(3) placing the hard carbon precursor in the tube furnace, raising the temperature to 900°C and keeping the temperature for 10 hours, and introducing carbon dioxide at a flow rate of 20 L/min for pore formation treatment on the hard carbon precursor, resulting in obtaining a spherical porous hard carbon material; and
(4) placing the spherical porous hard carbon material in a condensation zone of a high-frequency plasma treatment device, and placing a residual silicon powder, with a particle size D50 of 30 µm, from diamond wire cutting of silicon materials in a high-temperature zone; introducing nitrogen into the high-frequency plasma treatment device at a flow rate of 2 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 115 V and the current at 110 A, and nitrogen with a flow rate of 4.5 m³/h was used as the working gas; and transporting the gaseous silicon into the condensation zone of the high-frequency plasma treatment device by using nitrogen with a flow rate of 0.4 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 5

This embodiment provides a preparation process and performance test for a composite lithium storage material for a lithium ion battery. The preparation process comprises the following steps:
(1) placing 200 g of phenolic resin in a hydrothermal reactor for hydrothermal reaction, with the pressure 5 Mpa, raising the heating temperature to 300°C, and keeping the temperature for 8 hours, discharging materials and then cleaning and filtering the discharged materials until a filtrate became transparent and colorless, and then drying to obtain hard carbon particles;
(2) placing the hard carbon particles in a tube furnace, raising the temperature to 800°C, and keeping the temperature for 1 hour for carbonization treatment, so as to obtain a hard carbon precursor;
(3) placing the hard carbon precursor in the tube furnace, raising the temperature to 800°C and keeping the temperature for 5 hours, and introducing water vapor at a flow rate of 5 L/min for pore formation treatment on the hard carbon precursor, resulting in obtaining a spherical porous hard carbon material; and
(4) placing the spherical porous hard carbon material in a condensation zone of a high-frequency plasma treatment device, and placing a residual silicon powder, with a particle size D50 of 40 µm, from diamond wire cutting of silicon materials in a high-temperature zone; introducing argon into the high-frequency plasma treatment device at a flow rate of 2.5 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 120 V and the current at 120 A, and argon with a flow rate of 5 m³/h was used as the working gas; and transporting the gaseous silicon into the condensation zone of the high-frequency plasma treatment device by using argon with a flow rate of 0.5 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 6

This embodiment provides a preparation process and performance test for a composite lithium storage material for a lithium ion battery. The preparation process comprises the following steps:
(1) placing 200 g of phenolic resin in a hydrothermal reactor for hydrothermal reaction, with the pressure 0.1 Mpa, raising the heating temperature to 300°C, and keeping the temperature for 8 hours, discharging materials then cleaning and filtering discharged materials until a filtrate became transparent and colorless, and then drying to obtain hard carbon particles;
(2) placing the hard carbon particles in a rotary furnace for carbonization treatment, raising the heating temperature to 700°C, and keep the temperature for 6 hour for carbonization treatment, so as to obtain a hard carbon precursor;
(3) placing the hard carbon precursor in the rotary furnace, raising the temperature to 800°C and keeping the temperature for 10 hours, and at the same time, introducing a gas source at a flow rate of 5 L/min for pore formation treatment on the hard carbon precursor, resulting in obtaining a spherical porous hard carbon material, wherein the gas source was a mixture of carbon dioxide and water vapor; and
(4) placing the spherical porous hard carbon material in a condensation zone of a high-frequency plasma treatment device, and placing a residual silicon powder, with a particle size D50 of 50 µm, from diamond wire cutting of silicon materials in a high-temperature zone; introducing argon into the high-frequency plasma treatment device at a flow rate of 3 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 125 V and the current at 130 A, and argon with a flow rate of 5.5 m³/h was used as the working gas; and transporting the gaseous silicon into the condensation zone of the high-frequency plasma treatment device by using argon with a flow rate of 0.6 m³/h as a carrier gas, so that the gaseous silicon was deposited in pores of the spherical porous hard carbon material, allowing for growing nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 7

This embodiment provides a preparation process and performance test for a composite lithium storage material for a lithium ion battery. The preparation process comprises the following steps:
(1) placing 200 g of starch and polyvinylidene fluoride in a hydrothermal reactor for hydrothermal reaction, with the pressure 5 Mpa, raising the heating temperature to 300°C, and keeping the temperature for 8 hours, discharging materials then cleaning and filtering discharged materials until a filtrate became transparent and colorless, and then drying to obtain hard carbon particles;
(2) placing the hard carbon particles in a rotary furnace raising the temperature to 700°C, and keep the temperature for 1 hour for carbonization treatment, so as to obtain a hard carbon precursor;
(3) placing the hard carbon precursor in the rotary furnace, raising the temperature to 1000°C and keeping the temperature for 10 hours, and at the same time, introducing a gas source at a flow rate of 5 L/min for pore formation treatment on the hard carbon precursor, resulting in obtaining a spherical porous hard carbon material, wherein the gas source was a mixture of carbon dioxide and water vapor; and
(4) placing the spherical porous hard carbon material in a condensation zone of a high-frequency plasma treatment device, and placing a residual silicon powder, with a particle size D50 of 60 µm, from diamond wire cutting of silicon materials in a high-temperature zone; introducing argon into the high-frequency plasma treatment device at a flow rate of 3 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 130 V and the current at 140 A, and argon with a flow rate of 6 m³/h was used as the working gas; and transporting the gaseous silicon into the condensation zone of the high-frequency plasma treatment device by using argon with a flow rate of 0.7 m³/h as a carrier gas, so that the gaseous silicon was deposited in pores of the spherical porous hard carbon material, allowing for growing nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 8

This embodiment provides a preparation process and performance test for a composite lithium storage material for a lithium ion battery. The preparation process comprises the following steps:
(1) placing 200 g of starch and polyvinylidene fluoride in a hydrothermal reactor for hydrothermal reaction, with the pressure 5 Mpa, raising the temperature to 300°C, and keeping the temperature for 6 hours, discharging materials then cleaning and filtering discharged materials until a filtrate became transparent and colorless, and then drying to obtain hard carbon particles;
(2) placing the hard carbon particles in a rotary furnace raising the heating temperature to 700°C, and keeping the temperature for 5 hour for carbonization treatment, so as to obtain a hard carbon precursor;
(3) placing the hard carbon precursor in the rotary furnace, raising the temperature to 900°C and keeping the temperature for 5 hours, and at the same time, introducing a gas source at a flow rate of 5 L/min for pore formation treatment on the hard carbon precursor, resulting in obtaining a spherical porous hard carbon material, wherein the gas source was a mixture of carbon dioxide and water vapor; and
(4) placing the spherical porous hard carbon material in a condensation zone of a high-frequency plasma treatment device, and placing a residual silicon powder, with a particle size D50 of 70 µm, from diamond wire cutting of silicon materials in a high-temperature zone; introducing nitrogen into the high-frequency plasma treatment device at a flow rate of 3 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 135 V and the current at 150 A, and nitrogen with a flow rate of 6.5 m³/h was used as the working gas; and transporting the gaseous silicon into condensation zone of a high-frequency plasma treatment device by using nitrogen with a flow rate of 0.8 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 9

This embodiment provides a preparation process and performance test for a composite lithium storage material for a lithium ion battery. The preparation process comprises the following steps:
(1) placing 200 g of glucose in a hydrothermal reactor for hydrothermal reaction, with the pressure 2 Mpa, raising the heating temperature to 300°C, and keeping the temperature for 8 hours, discharging materials then cleaning and filtering discharged materials until a filtrate became transparent and colorless, and then drying to obtain hard carbon particles;
(2) placing the hard carbon particles in a rotary furnace raising the temperature to 900°C, and keeping the temperature for 1 hour for carbonization treatment, so as to obtain a hard carbon precursor;
(3) placing the hard carbon precursor in the rotary furnace, raising the temperature to 1000°C and keeping the temperature for 10 hours, and at the same time, introducing water vapor at a flow rate of 5 L/min for pore formation treatment on the hard carbon precursor, resulting in obtaining a spherical porous hard carbon material; and
(4) placing the spherical porous hard carbon material in a condensation zone of a high-frequency plasma treatment device, and placing a residual silicon powder, with a particle size D50 of 80 µm, from diamond wire cutting of silicon materials in a high-temperature zone; introducing nitrogen into the high-frequency plasma treatment device at a flow rate of 3 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 140 V and the current at 160 A, and nitrogen with a flow rate of 7 m³/h was used as the working gas; and transporting the gaseous silicon into the condensation zone of the high-frequency plasma treatment device by using nitrogen with a flow rate of 0.9 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

### Embodiment 10

This embodiment provides a preparation process and performance test for a composite lithium storage material for a lithium ion battery. The preparation process comprises the following steps:
(1) placing 200 g of glucose in a hydrothermal reactor for hydrothermal reaction, with the pressure 5 Mpa, raising the heating temperature to 300°C, and keeping the temperature for 6 hours, discharging materials then cleaning and filtering discharged materials until a filtrate became transparent and colorless, and then drying to obtain hard carbon particles;
(2) placing the hard carbon particles in a rotary furnace raising the temperature to 900°C, and keeping the temperature for 1 hour for carbonization treatment, so as to obtain a hard carbon precursor;
(3) placing the hard carbon precursor in the rotary furnace, raising the temperature to 900°C and keeping the temperature for 5 hours, and at the same time, introducing water vapor at a flow rate of 5 L/min for pore formation treatment on the hard carbon precursor, resulting in obtaining a spherical porous hard carbon material; and
(4) placing the spherical porous hard carbon material in a condensation zone of a high-frequency plasma treatment device, and placing a residual silicon powder, with a particle size D50 of 90 µm, from diamond wire cutting of silicon materials in a high-temperature zone; introducing argon into the high-frequency plasma treatment device at a flow rate of 3 m³/h to replace air, and turning on a plasma generator of the high-frequency plasma treatment device to ionize a working gas to generate a plasma torch, gasifying the silicon powder in the high-temperature zone into gaseous silicon, wherein the working voltage of the plasma generator was set at 150 V and the current at 180 A, and argon with a flow rate of 8 m³/h was used as the working gas; and transporting the gaseous silicon into the condensation zone of the high-frequency plasma treatment device by using argon with a flow rate of 1 m³/h as a carrier gas, so that the gaseous silicon was deposited in pores of the spherical porous hard carbon material, allowing for nucleation and growth into nano silicon, thereby obtaining the composite lithium storage material for a lithium ion battery.

The composite lithium storage material for a lithium ion battery prepared by this embodiment was used to prepare electrodes, and batteries were assembled for testing. The specific process was the same as that in Embodiment 1. The test data are recorded in Table 1.

In order to better illustrate the effect of the embodiments of the invention, Comparative example 1 is used for comparison.

### Comparative example 1

The comparative example provides a traditional silicon-carbon composite material preparation method and a performance test. The preparation method comprises the following steps:
(1) placing 200 g of nano silicon and 500 g of phenolic resin powder in a hydrothermal reactor for hydrothermal treatment, with the pressure 5 Mpa, raising the heating temperature to 300°C, and keeping the temperature for 8 hours, discharging materials then cleaning and filtering discharged materials until a filtrate became transparent and colorless, and then drying to obtain a spherical silicon-containing carbonized precursor; and
(2) placing the spherical silicon-containing carbonized precursor in a rotary furnace, raising the temperature to 900°C at 3°C/min, and keeping the temperature for 6 hours in a nitrogen atmosphere for carbonization treatment, so as to obtain a silicon-carbon composite material.

The silicon-carbon composite material prepared by this comparative example was used to prepare electrodes, and batteries were assembled for testing. The specific process was the same as that in Embodiment 1. The test data are recorded in Table 1.

The composite lithium storage materials for a lithium ion battery prepared by Embodiments 1-10, and the silicon-carbon composite material prepared by Comparative example 1 were used to prepare electrodes, and batteries were assembled for electrochemical performance testing. The test data of charge specific capacity and initial-cycle efficiency are recorded in Table 1.

| No. | Charge specific capacity (mAh/g) | Initial-cycle efficiency (%) |
|---|---|---|
| Embodiment 1 | 1379 | 83.86 |
| Embodiment 2 | 1400 | 89.85 |
| Embodiment 3 | 1395 | 89.87 |
| Embodiment 4 | 1399 | 89.96 |
| Embodiment 5 | 1404 | 90.25 |
| Embodiment 6 | 1410 | 90.77 |
| Embodiment 7 | 1411 | 90.58 |
| Embodiment 8 | 1423 | 91.00 |
| Embodiment 9 | 1418 | 90.24 |
| Embodiment 10 | 1413 | 90.14 |
| Comparative example 1 | 1212 | 78.92 |

By comparing Comparative example 1 with Embodiments 1-10 of the present invention, it can be seen that the charge specific capacity and inital-cycle efficiency of the batteries prepared based on Embodiments 1-10 are superior to that of Comparative example 1, indicating better cycle performance and charging properties in batteries prepared based on Embodiments 1-10. The reason is that the porous hard carbon material of the composite lithium storage material provided in the present invention is used as a matrix, and more nano silicon particles can be deposited in penetrating pores, so that the composite lithium storage material has a higher compaction density, such that the charging specific capacity of the material is improved, and the intercalation and deintercalation of lithium ions are facilitated during the charging and discharging process; in addition, the damage of the volume expansion thereof to the structure is relieved, and the cycle performance and charging performance of the material are improved. Moreover, the present invention further improves the specific capacity and initial-cycle efficiency of the material by controlling the working gas flow, the carrier gas flow and the working voltage and current of the plasma generator. The present invention allows for control of the flow rates of the working gas and carrier gas, ensuring that gaseous silicon can be uniformly deposited inside the pores of the porous hard carbon material. This prevents the uneven deposition of gaseous silicon in the porous carbon material and even direct deposition on its surface when the flow rates of the working gas and carrier gas are too high, which would impact battery performance.

The above-mentioned specific embodiments further explain the purpose, technical solution and beneficial effects of the present invention in detail. It should be understood that the above are only specific embodiments of the present invention and are not used to limit the scope of protection of the present invention. Any modification, equivalent substitution, improvement, etc. made within the spirit and principles of the present invention should be included in the scope of protection of the invention.

## Claims

1. A composite lithium storage material for a lithium ion battery, comprising a spherical porous hard carbon material and nano silicon, which grows in pores of the spherical porous hard carbon material in situ; wherein
the nano silicon is gasified from a micron-sized silicon powder by means of a high-frequency plasma treatment device and then grows in the pores of the porous hard carbon material in situ; and
a particle size of the nano silicon is 0.1-50 nm, and a mass percentage of the nano silicon in the silicon-hard carbon composite material is 1-70%.

2. The composite lithium storage material according to Claim 1, wherein the average pore diameter of the pores of the spherical porous hard carbon material is 0.1-50 nm, and the particle size of the composite lithium storage material is 1-100 µm.

3. The composite lithium storage material according to Claim 1, wherein the porous hard carbon material is prepared from a hard carbon matrix; the hard carbon matrix comprises one or more of glucose, sucrose, polyvinylpyrrolidone, starch , polyvinylidene fluoride, phenolic resin or polyvinyl chloride; and
the micron-sized silicon powder comprises one or more of residual silicon powder from diamond wire cutting of silicon materials, waste silicon powder from organosilicone production or industrial silicon powder.

4. A preparation method for the composite lithium storage material for a lithium ion battery according to any one of claims 1-3, comprising:
placing a hard carbon matrix in a hydrothermal reactor for hydrothermal treatment, discharging , then cleaning and filtering the discharged materials until a filtrate becomes transparent and colorless, and then drying to obtain hard carbon particles;
placing the hard carbon particles in a reaction device, raising the temperature to 700-1300°C and keeping the temperature for 0.5-15 hours for carbonization treatment, and discharging carbonized products, and then crushing and screening the discharged carbonized products to obtain a hard carbon precursor;
placing the hard carbon precursor in the reaction device, raising the temperature to 600-1000°C and keeping the temperature for 1-10 hours, during keeping the temperature, introducing a gas source on the hard carbon precursor for pore formation treatment, resulting in obtaining a spherical porous hard carbon material;
placing the spherical porous hard carbon material in a condensation zone of a high-frequency plasma treatment device, and placing a micron-sized silicon powder in a high-temperature zone of the high-frequency plasma treatment device; introducing a protective gas into the high-frequency plasma treatment device to replace air, and turning on a plasma generator of the high-frequency plasma treatment device to ionize a working gas to generate a plasma torch, gasifying the micron-sized silicon powder into gaseous silicon; and transporting the gaseous silicon into the condensation zone by using a carrier gas, so that the gaseous silicon is deposited in pores of the porous hard carbon material, allowing for nucleation and growth into nano silicon, thereby obtaining the composite lithium storage material for a lithium ion battery;
wherein the particle size of the nano silicon is 0.1-50 nm, and the mass percentage of the nano silicon in the silicon-hard carbon composite material is 1-70%.

5. The preparation method according to Claim 4, wherein the hard carbon matrix comprises one or more of glucose, sucrose, polyvinylpyrrolidone, starch, polyvinylidene fluoride, phenolic resin or polyvinyl chloride;
the micron-sized silicon powder comprises one or more of residual silicon powder from diamond wire cutting of silicon materials, waste silicon powder from organosilicone production or industrial silicon powder; the particle size D50 of the micron-sized silicon powder is 5-100 µm;
the average pore diameter of the pores of the spherical porous hard carbon material is 0.1-50 nm; and
the particle size of the composite lithium storage material is 1-100 µm.

6. The preparation method according to Claim 4, wherein the hydrothermal treatment is pressurized hydrothermal treatment or non-pressurized hydrothermal treatment;
the conditions of the pressurized hydrothermal treatment are as follows: the pressure is 0.1-10 MPa, the heating temperature is 150-300°C, and the temperature is kept for 2-8 hours;
the conditions of the non-pressurized hydrothermal treatment are as follows: the heating temperature is 200-300°C, and the temperature is kept for 5-30 hours; and
the reaction device comprises one of rotary furnace, tube furnace, bell type furnace or fluidized bed.

7. The preparation method according to Claim 4, wherein the gas source comprises one of oxygen, carbon dioxide or water vapor, and the flow rate of the gas source is 0.5-20 L/min.

8. The preparation method according to Claim 4, wherein the protective gas is nitrogen or argon, and the flow rate of the protective gas is 0.5-3 m³/h;
the working gas is nitrogen or argon, and the flow rate of the working gas is 3-8 m³/h; the carrier gas is nitrogen or argon, and the flow rate of the carrier gas is 0.1-1 m³/h; and the working voltage for the plasma generator to generate the plasma torch is 100-150 V, and the current is 80-180 A.

9. A negative electrode plate, wherein the negative electrode plate comprises the composite lithium storage material according to any one of claims 1-3.

10. A lithium ion battery, wherein the lithium ion battery comprises the negative electrode plate according to Claim 9.
